# EUROPEAN PATENT APPLICATION

(11) **EP 1 942 133 A1**
(43) Date of publication of application: **09.07.2008**
(21) Application number: 06822436.9
(22) Date of filing: 27.10.2006
(51) Int. Cl.: C08J 9/06, B65D 39/00, C08L 53/00

(54) **SYNTHETIC CORK STOPPER**

(30) Priority: 28.10.2005 JP 2005314734
(71) Applicant: Kaneka Corporation, Kita-ku Osaka-shi, Osaka 530-8288 (JP)
(72) Inventor: KIMURA, Katsuhiko, Settsu-shi, Osaka 5660072 (JP); NAKABAYASHI, Hironari, Settsu-shi, Osaka 5660072 (JP)
(74) Representative: TBK-Patent
(86) International application number: PCT/JP2006/321468
(87) International publication number: WO 2007/049733

(57) **Abstract**

A synthetic cork stopper which has excellent gas-barrier properties and is satisfactory in sealing properties and suitability for opening. The synthetic cork stopper is obtained by foaming a composition including (a) an isobutylene-based block copolymer comprising a polymer block comprising isobutylene as its main component and a polymer block formed from a cationic polymerizable monomer ingredient in which isobutylene is not its main component; and a foaming agent.

## Description

### TECHNICAL FIELD

The present invention relates to synthetic cork stoppers used as stoppers for glass bottles, metal bottles, PET (polyethylene terephthalate) bottles, and the like, especially to a synthetic cork stopper having an excellent gas-barrier property, which is made by foaming a composition comprising an isobutylene-based block copolymer and a foaming agent.

### BACKGROUND ART

Previously, a natural cork has been most commonly used as a stopper for glass bottles, metal bottles, PET (polyethylene terephthalate) bottles and the like. The natural cork has been widely used as a stopper for bottles because it has a better grip for sealing, smooth opening by moderate power, as well as a resealing capability. Wine bottles in particular, it is a kind of ceremony to remove a cork with a corkscrew.

However, it is known that the natural cork has several problems. The natural cork is not constant in quality, depending on producing regions and spoils the flavor of the contents by its peculiar smell. Moreover, it allows contamination with fungus or bacteria, which deteriorates the contents by adding some unpleasant smell and color. In addition, recently the natural cork is becoming hard to obtain due to the shortage of the high quality natural cork.

Under these circumstances, so-called synthetic corks comprising resinoid such as a thermoplastic elastomer were developed and have been using as stoppers for bottles. Among them, the synthetic cork stopper obtained by foaming a composition comprising a styrene block copolymer as the main component is reported (Patent document 1, 2). This synthetic cork stopper made from styrene block copolymer is adjustable to the appropriate hardness and gravity, and is satisfactory in sealing and opening properties. On the contrary, the synthetic cork stopper has poor gas-barrier property, which would easily cause the deterioration of the contents in quality and flavor due to oxidization.
Patent document 1: Japanese Translation of PCT International Application, Publication No. 9-500074
Patent document 2: Japanese Translation of PCT International Application, Publication No. 2003-503288

### DISCLOSURE OF INVENTION

### [Technical Problem]

An object of the present invention is to provide a synthetic cork stopper excellent not only in sealing and opening properties but also in gas-barrier property.

### [Technical Solution]

As result of diligent works to attain the object, the inventors of the present invention found that the object can be attained by a synthetic cork stopper being produced by foaming a composition including isobutylene-based block copolymer and a foaming agent.

The present invention relates to a synthetic cork stopper, being produced by foaming a composition, wherein the composition comprises: (a) isobutylene-based block copolymer including: (i) a polymer block whose main component is isobutylene; and (ii) a polymer block formed from a cationic polymerizable monomer whose main component is other than isobutylene; and (b) a foaming agent.

A preferable embodiment of the present invention is that the synthetic cork stopper is arranged such that the composition comprises the component (b) in a range of 0.1 to 10 parts by weight, to 100 parts by weight of the component (a).

A preferable embodiment of the present invention is that the synthetic cork stopper is arranged such that the composition further comprises (c) a polyolefin in a range of 1 to 100 parts by weight.

A preferable embodiment of the present invention is that the synthetic cork stopper is arranged such that the composition further comprises (d) a softener in a range of 1 to 100 parts by weight.

A preferable embodiment of the present invention is that the synthetic cork stopper is arranged such that the composition further comprises (e) a lubricant in a range of 0.1 to 10 parts by weight.

A preferable embodiment of the present invention is that the synthetic cork stopper is arranged such that the polymer block (ii) is a polymer block whose main component in component (a) is an aromatic vinyl monomer.

A preferable embodiment of the present invention is that the synthetic cork stopper is arranged such that the component (a) is a triblock copolymer formed as the polymer block (ii)-the polymer block (i)-the polymer block (ii).

A preferable embodiment of the present invention is that the synthetic cork stopper is arranged such that the aromatic vinyl monomer in the component (a) is at least one selected from the group consisting of styrene, p-methylstyrene, α-methylstyrene, and indene.

A preferable embodiment of the present invention is that the synthetic cork stopper is arranged such that (b) the foaming agent is one selected from the group consisting of azodicarboxylic amide, sodium hydrogen carbonate, and citric acid.

A preferable embodiment of the present invention is that the synthetic cork stopper is arranged such that the (c) polyolefin is polyethylene or polypropylene.

A preferable embodiment of the present invention is that the synthetic cork stopper is arranged such that (d) the softener is polybutene.

A preferable embodiment of the present invention is that the synthetic cork stopper is arranged such that the composition has a JIS-A hardness in a range of 40 to 95 before being foamed.

A preferable embodiment of the present invention is that the synthetic cork stopper has a specific gravity in a range of 0.1 to 0.8g/cm³.

### [Effect of the Invention]

Due to excellent softness and gas-barrier property provided from an isobutylene-based block copolymer, a synthetic cork stopper of the present invention can seal a container with a good shape followability and will hardly allow (i) oxidation of content of the container due to passage of oxygen through the synthetic cork stopper, and (ii) gas leakage from content, such as carbonated beverage, contained in the container with inner pressure. Thus, a synthetic cork stopper of the present invention is suitable as a synthetic cork stopper with which a container can be corked up or resealed easily.

### BEST MODE FOR CARRYING OUT THE INVENTION

A synthetic cork stopper in the present invention comprises, (a) isobutylene-based block copolymer including: (i) a polymer block whose main component is isobutylene; and (ii) a polymer block formed from a cationic polymerizable monomer whose main component is other than isobutylene; and (b) a foaming agent.

One component of the (a) in the present invention, the monomer component in which isobutylene is not the main component means the monomer component containing 30% or less isobutylene by weight. It is preferable that this monomer component contains 10% or less isobutylene by weight and is more preferable that this monomer component contain 3% or less isobutylene by weight. If the amount of isobutylene exceeds 30% by weight therein, rubber elasticity would be likely to decrease due to the inadequacy of phase segregation with the polymer block comprising isobutylene as the main component.

In the monomer component in the present invention in which isobutylene is not the main component, the other components are not specifically limited, as long as it is a cationic polymerizable monomer, such as aliphatic olefins, aromatic vinyls, dienes, vinyl ethers, silanes, vinylcarbazole, β-pinene, acenaphthylene or the like. These components may be used solely or two or more of them may be used in combination.

As an aliphatic olefin monomer, ethylene, propylene, 1-butene, 2-methyl-1-butene, 3-methyl-1-butene, pentene, hexene, cyclohexene, 4-methyl-1-pentene, vinylcyclohexane, octene, norbornene, and the like are exemplified.

As an aromatic vinyl monomer, styrene, o-, m- or p-methylstyrene, α-methylstyrene, β-methylstyrene, 2, 6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethyl styrene, β-methyl-2,4-dimethylstyrene, o-, m- or p-chlorostyrene, 2,6-dichlorostyrene, 2,4-dichloro styrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichloro styrene, β-chloro-2, 4-dichloro styrene, o-, m- or p-t-butyl styrene, o-, m- or p-methoxy styrene, o-, m- or p-chloromethylstyrene, o-, m- or p-bromomethylstyrene, styrene derivatives substituted by silyl-group, indene, vinylnaphthalene, and the like are exemplified.

As a diene monomer, butadiene, isoprene, hexadiene, cyclopentadiene, cyclohexadiene, dichlopentadiene, divinylbenzene, ethylidene norbornene, and the like are exemplified.

As a vinyl ether monomer, methyl vinyl ether, ethyl vinyl ether, (n-, iso)propyl vinyl ether, (n-, sec-, tert-, iso) butyl vinyl ether, methyl propenyl ether, ethyl propenyl ether, and the like are exemplified.

As a silane compound, vinyl trichlorosilane, vinyl methyldichlorosilane, vinyl dimethylchlorosilane, vinyl dimethylmethoxysilane, vinyl trimethylsilane, divinyldichlorosilane, divinyl dimethoxysilane, divinyldimethylsilane, 1, 3-divinyl-1, 1, 3, 3-tetramethyldisiloxane, trivinylmethylsilane, γ-methacryloyloxypropyltrimethoxysilane, γ-methacryloyl oxypropylmethyldimethoxysilane, and the like are exemplified.

It is preferable that the monomer component in which isobutylene is not the main component in the present invention is a monomer component comprising an aromatic vinyl monomer as the main component, in order to attain a good balance of physicality and polymerization properties. The aromatic vinyl monomer in the present invention means a monomer component which contains 60% or more (80% or more is particularly preferable) aromatic vinyl monomer. As the aromatic vinyl monomer, it is preferable to have at least one kind of monomer selected from the group of styrene, α-methylstyrene, p-methylstyrene, and indene. In terms of cost, using styrene, α-methylstyrene, or these mixtures are particularly preferable.

The monomer component in the present invention in which isobutylene is the main component may or may not contain a monomer other than isobutylene. Normally, the isobutylene in this monomer content is 60% or more, preferably 80% or more. The other monomer is not specifically limited, as long as it is a cationic polymerizable monomer like exemplified above.

The isobutylene-based block copolymer in the present invention is not particularly limited, provided that it comprises a polymer block comprising isobutylene as the main component and a polymer block formed from a monomer component in which isobutylene is not the main component. For example, the isobutylene-based block copolymer may be a straight, branched, or asteroid structure block copolymer, diblock copolymer, triblock copolymer, or multiblock copolymer. Some preferable block copolymers are a block copolymer comprising an aromatic vinyl monomer as the main component, a block copolymer comprising an isobutylene as the main component, and a triblock copolymer formed from a block copolymer comprising an aromatic vinyl monomer as the main component. These block copolymers are preferable in terms of property balance and forming processability. They may be used solely or in two or more of them may be used in combination, to obtain the intended physicality and forming processability.

The ratio between the polymer block comprising an isobutylene as the main component and the polymer block formed from a monomer component in which isobutylene is not the main component is not specifically limited. In terms of flexibility and rubber elasticity, it is preferable that the polymer block comprising isobutylene as the main component is from 95 to 40% by weight, and the polymer block formed from a monomer component in which isobutylene is not the main component is from 5 to 60% by weight. Further, it is particularly preferable that the former polymer block is from 90 to 60% by weight and the latter polymer block is from 10 to 40% by weight.

Also, a number average molecular weight of the isobutylene-based block copolymer is not specifically limited. However, considering flowability, forming processability, and rubber elasticity, it is preferably in a range of from 30,000 to 500,000, more preferably in a range of from 50,000 to 400,000. If the number average molecular weight of the isobutylene-based block copolymer is below the above range, the mechanical property would not be sufficient. On the contrary, a number average molecular weight thereof exceeding the above range is disadvantageous in flowability and forming processability.

The production method of the isobutylene-based block copolymer is not specifically limited. For example, it is obtained by polymerizing the monomer component comprising an isobutylene as the main component and the cationic polymerizable monomer component in which isobutylene is not the main component in the presence of the compound represented by the formula (1):

(CR¹R²X)ₙR³ (1)

[where X is a halogen atom or a substituent group selected from the alkyl or acyloxy groups of carbon number 1 to 6, R¹ and R² are independently a hydrogen atom or a monovalent carbon hydride group of carbon number 1 to 6 (R¹ and R² may be identical or different), R³ is a monovalent or polyvalent aromatic or aliphatic carbon hydride group, and n is a natural number in a range of from 1 to 6.]

The compound represented by the above formula (1) is an initiator to generate a carbocation in the presence of Lewis acid as a starting point of the cationic copolimerization. As the examples of the compounds represented by the formula (1) in the present invention are as follows.
(1-chloro-1-methylethyl) benzene [C₆H₅C(CH₃)₂Cl], 1,4-bis(1-chloro-1-methylethyl)benzene[1, 4-C1(CH₃)₂CC₆H₄C(CH₃)₂C1], 1,3-bis(1-chloro-1-methylethyl)benzene[1, 3-C1(CH₃)₂CC₆H₄C(CH₃)₂C1], 1,3,5-tris(1-chloro-1-methylethyl) benzene[1,3,5-(C1C(CH₃)₂)₃C₆H_{3]}, 1,3-bis(1-chloro-1-methylethyl)-5-(tert-butyl)benzene[1, 3-(C(CH₃)₂C1)₂-5-(C(CH₃)₃)C₆H₃]

Among them, particularly preferable compounds are bis(1-chloro-1-methylethyl)benzene[C₆H₄(C(CH₃)₂Cl)₂] and tris(1-chloro-1-methylethyl)benzene[(C1C(CH₃)₂)₃C₆H₃]. Additionally, bis(1-chloro-1-methylethyl)benzene is also known as bis(α-chloroisopropyl)benzene, bis(2-chloro-2-propyl)benzene or dicumylchloride. tris(1-chloro-1-methylethyl)benzene is also known as tris(α-chloroisopropyl)benzene, tris(2-chloro-2-propyl)benzene, or tricumylchloride.

In the process of generating isobutylene-based block copolymer by polymerization, Lewis acid catalyst also may coexists. In this case, any Lewis acids are available as long as it can be used in cationic polymerization. For example, metal halides such as TiCl₄, TiBr₄, BCl₃, BF₃, BF₃·OEt₂, SnCl₄, SbCl₅, SbF₅, WCl₆, TaCl₅, VCl₅, FeCl₃, ZnBr₂, AlCl₃, AlBr₃, and the like, and organic metal halides such as Et₂AlCl, EtAlCl₂, and the like are preferable for use. Among them, TiCl₄, BCl₃, SnCl₄ are more preferable considering the ability as a catalyst and industrial availability. The usage amount of Lewis acid is not specifically limited, but it is calculated in considering the polymerization property of the monomers in use and the polymerization density. Normally, with respect to the compound represented by the formula (1), 0.1 to 100 mole equivalents of Lewis acid may be used, more preferably ranging from 1 to 50 mole equivalents.

In the polymerization of the isobutylene-based block copolymer, an electron donor may also coexist as needed. This electron donor is thought to have an effect to stabilize the generated carbocation in cationic polymerization. The electron donor allows generating the polymer having a dense molecular weight distribution and a controlled structure. The available electron donors are not specifically limited. For example, pyridines, amines, amides, sulfoxides, esters, the metal compounds comprising an oxygen atom connected with metal atom, and the like are exemplified.

The polymerization of isobutylene-based block copolymer may be carried out in an organic solvent as needed. Any organic solvents can be used without limitation, unless it disturbs the cationic polymerization essentially. Practically, examples of the organic solvent encompass: haloalkenes such as chloromethane, dichloro methane, chloroform, ethyl chloride, dichloroethane, n-propylchloride, n-butylchloride, chlorobenzene; alkyl benzenes such as benzene, toluene, xylene, ethyl benzene, propyl benzene, butylbenzene, and the like; straight aliphatic hydrocarbons such as ethane, propane, butane, pentane, hexane, heptane, octane, nonane, decane, and the like; branched aliphatic hydrocarbons such as 2-methylpropane, 2-methylbutane, 2,3,3-trimethylpentane, 2,2,5-trimethylhexane, and the like; cyclic aliphatic hydrocarbons such as cyclohexane, methylcyclohexane, ethylcyclohexane, and the like; paraffin oil whose petroleum fraction is refined via hydrogenation refining; and the like.

The foregoing solvents may be used solely or two or more of them may be used in combination, considering the balance of polymerization property of the monomer composing the block copolymer and the resolvability of the copolymer to be obtained.

The usage amount of the solvent is calculated so that the density of the copolymer is from 1 to 50 wt%, more preferably from 5 to 35 wt% in consideration of the viscosity and the ease of cooling of the copolymer solution to be obtained.

In the actual polymerization, each component is mixed under cooled condition, for example under the temperature from -100 to 0°C. To achieve the balance of energy cost and the stability of copolymer, particularly preferable temperature ranges from -30 to -80°C.

The synthetic cork stopper in the present invention must be required to add a foaming agent (b) for foaming. Any foaming agents, chemical type, physical type, organic type, or inorganic type can be used as long as it can foam a thermoplastic resin. Some specific examples are azo compound, such as azodicarbonamide and the like; nitroso compound, such as N,N'-dinitrosopentamethylenetetramine and the like; carbonate such as sodium acid carbonate, ammonium acid carbonate and the like; organic acid such as citric acid, citric sodium, oxalic acid and the like; sodium borohydride, and the like are exemplified. Additionally, the mixture of carbonate and organic acid may also be used. When the shaping by foaming is carried out under relatively high temperature, p,p'-oxybisbenzenesulfonyl semicarbazide, p-toluensulfonyl semicarbazide, trihydrazinotriazine, barium azodicarboxylate, and the like may be used as well. Among them, azodicarbonamide, sodium acid carbonate, and citric acid are preferable in terms of easy foaming and availability.

For the additive amount of the foaming agent (b), with respect to 100 parts by weight of the isobutylene-based block copolymer (a), it is preferable that the amount of foaming agent ranges from 0.1 to 10 parts by weight, more preferably from 0.1 to 5 parts by weight, most preferably from 0.5 to 5 parts by weight. However, it is not preferable to exceed 10 parts by weight, because the amount of foaming agent exceeding 10 parts by weight would lead to the foam break due to the generation of excessive amount of gas. On the contrary, if it was less than 0.1 parts by weight, the foaming would tend to be insufficient.

As the addition method of the foaming agent (b), it may be added in the process of kneading components. As an alternative, the foaming agent or its master batch (a large amount of foaming agent is mixed with thermoplastic resin or thermoplastic elastomer) may be added in the process of formation.

In the synthetic cork stopper in the present invention, a polyolefin (c) is used for adding flowability during molding, as needed. As the polyolefin, α-olefin homopolymer, random copolymer, block copolymer, and any mixture thereof; random copolymer, block copolymer, graft copolymer between α-olefin and another unsaturated monomer, and these copolymers oxidized, halogenated or sulfonated are exemplified. These may be used solely or two or more of them may be used in combination. More practically, polyethylene resin such as polyethylene, ethylene-propylene copolymer, ethylene-propylene-nonconjugated diene copolymer, ethylene-butene copolymer, ethylene-hexene copolymer, ethylene-octene copolymer, ethylene-vinyl acetate copolymer, ethylene-vinyl alcohol copolymer, ethylene-ethyl acrylate copolymer, ethylene-acrylic acid copolymer, ethylene-methyl acrylate-maleic acidanhydride copolymer, chlorinated polyethylene, polypropylene resin such as polypropylene, propylene-ethylene random copolymer, propylene-ethylene block copolymer, chlorinated polypropylene and the like, (co)polymer such as poly-1-butene, polyisobutylene, polymethylpentene, (co)polymer of cyclic olefin and the like are exemplified. Among them, polyethylene, polypropylene, or the mixture of these are preferably used in terms of the cost and the physicality balance. As polyethylene, high-density polyethylene, low-density polyethylene, straight low-density polyethylene are exemplified. As polypropylene, homo polypropylene, random polypropylene, block polypropylene are exemplified.

MFR (a melt flow rate) of the polyolefin is not specifically limited. In terms of flowability during the shaping however, it is preferable that the MFR ranges from 0.1 to 1000 (g/10min), more preferably from 0.1 to 100 (g/ 10min), most preferably from 1 to 100 (g/ 10min).

Any straight or branched polyolefin is adoptable, but branched polyolefin is preferably used in order to stabilize the foaming behavior. As the branched polyolefin, there are two types, long-chain branched type and short-chain branched type. Each type is used for a different purpose. As the long-chain branched polyolefin, low-density polyethylene is an example. As the shot-chain branched polyolefin, straight low-density polyethylene, poly-1-butene, poly-1-hexene, poly-1-octene, and the like are examples.

For the additive amount of the polyolefin (C), with respect to 100 parts by weight isobutylene-based block copolymer (a), it is preferable that the amount of polyolefin ranges from 1 to 100 parts by weight, more preferably from 1 to 70 parts by weight, most preferably from 1 to 50 parts by weight. However, it is not preferable to exceed 100 parts by weight, because the amount of polyolefin exceeding 100 parts by weight would lead to an increase in hardness, thereby resulting in poor corking quality.

The synthetic cork stopper in the present invention uses a softener (d) for adding flowability during shaping, and flexibility, as needed. The softener is not specifically limited. Normally, a liquid softener at room temperature is preferably used. As such a softener, mineral oil, vegetable oil, and synthetic one for various rubber products or resins are exemplified. As the mineral oil, processed oil such as naphthene, paraffin, and the like are exemplified. As the vegetable oil, ricinus, cotton oil, flaxseed oil, rapeseed oil, soybean oil, palm oil, copra oil, peanut oil, Japanese wax, pine oil, olive oil, and the like are exemplified. As the synthetic oil, polybutene, low-molecular weight polybutadiene, and the like are exemplified. Among them, polybutene is preferably used in terms of compatibility with the component (a) and gas-barrier properties. Two or more of the forgoing softeners may be used in combination to obtain the required hardness and melting viscosity.

For the additive amount of the softener (d), with respect to 100 parts by weight isobutylene-based block copolymer, it is preferable that the amount of softener ranges from 1 to 100 parts by weight, more preferably from 1 to 50 parts by weight, most preferably from 1 to 30 parts by weight. However, it is not preferable to exceed 100 parts by weight. The amount of softener exceeding 100 parts by weight would lead to extraction of the softener from the synthetic cork stopper to contents in the container and a decrease in gas-barrier property.

A lubricant as a component (e) in the present invention is used for providing easy opening property and processability during the molding. Preferable examples of the lubricant encompass fatty acid amide lubricant, metal aliphatate lubricant, fatty acid ester lubricant, fatty acid lubricant, aliphatic alcohol lubricant, a partially esterified mixture of a fatty acid and multivalent alcohol, paraffinic lubricant, and the like. A combination of two or more of them may be used.

As the fatty acid amid lubricant, erucamide, oleamide, stearamide, behenamide, ethylenebis stearamide, ethylene bis oleamide, ethylene bis erucamide, ethylenebis lauramide, m-xylylene bis stearamide, p-phenylene bis stearamide, and the like are exemplified.

As the metal aliphatate lubricant, calcium stearate, magnesium stearate, aluminum stearate, zinc stearate, barium stearate, and the like are exemplified.

As the fatty acid ester lubricant, methyl laurate, methyl myristate, methyl palmitate, methyl stearate, methyl oleate, methyl erucic, methyl behenic, butyl laurate, butyl stearate, isopropyl myristate, isopropyl palmitate, octyl palmitate, coconut fatty acid octyl ester, octyl stearate, specialty tallow octyl ester, lauryl laurate, stearyl stearate, behenyl behate, cetyl myristate, hydrogenated beef fat, hydrogenated ricinus, and the like are exemplified.

As the aliphatic acid lubricant, stearic acid, palmitic acid, oleic acid, linoleic acid, linoleric acid, and the like are exemplified.

As the aliphatic alcohol, stearyl alcohol, cetyl alcohol, 1-tetradecanol, lauryl alcohol, and the like are exemplified.

As the partial ester of aliphatic acid and polyhydric alcohol, monoglyceride stearate, diglyceride stearate, monoglyceride olein, and the like are exemplified.

As the paraffinic lubricant, paraffin wax, liquid petrolatum, polyethylene wax, polyethylene oxide wax, polypropylene wax, and the like are exemplified.

Other than the above, montanic acids and its derivatives, such as montanic acid ester, metal montanate, montanic acid partially saponified ester, and the like, as well as silicone grease are usable.

The forgoing lubricants may be independently used, or a combination of two or more kinds may be used. Among them, the fatty acid amide is preferable and the erucic acid amide is the most preferable in terms of opening property, improved effect in forming processability, and the effect to the flavor of contents. Additionally, it is possible to improve the opening property by using in combination with silicone oil.

For the additive amount of the lubricant, with respect to 100 parts by weight of the isobutylene-based block copolymer, it is preferable that ranges from 0.1 to 10 parts by weight, more preferably from 0.1 to 5 parts by weight, most preferably from 0.5 to 5 parts by weight. However, the amount of lubricant exceeding 10 parts by weight is not preferable, which would lead to the bleed out of the lubricant due to the insufficient mixing. Moreover, the amount of lubricant exceeding 10 parts by weight tends to lower the mechanical strength of the composition to be obtained. On the contrary, if it is less than 0.1 parts by weight, the improved effect in the opening property and forming processability would tend to become insufficient.

A processing material may be added to the composition for the synthetic cork stopper in the present invention for the purpose of improving the foaming property. The processing material means an additive to stabilize the foaming reaction by improving a fusing tension in the fusion process. As such a processing material, an acrylic processing material (specific examples are Kane Ace PA made by Kaneka Co., Ltd., METABLEN P made by Mitsubishi Rayon Co., Ltd.), a super-high-molecular polyethylene, a fluorine processing material, (Dynamer PPA made by Sumitomo Three M Co., Ltd., METABLEN A made by Mitsubishi Rayon Co., Ltd.) and the like are exemplified. Among them, the fluorine processing material is preferable in terms of the foaming property.

For the amount of processing material to add, with respect to the 100 parts by weight of the isobutylene-based block copolymer (a), it is preferable that the amount of processing material ranges from 0.1 to 10 parts by weight, more preferably from 0.1 to 5 parts by weight, most preferably from 0.5 to 5 parts by weight. However, it is not preferable to exceed 10 parts by weight. The amount of processing material exceeding 10 parts by weight it would lead to deteriorate the flexibility of the synthetic cork stopper to be obtained.

Further, a bulking agent may be added to the composition for the synthetic cork stopper in the present invention to improve the physicality and cost efficiency. Some preferable examples are flake-shaped inorganic fillers made of such as clay, diatom earth, silica, talc, barium sulfate, calcium carbonate, magnesium carbonate, metal oxide, mica, graphite, aluminum hydroxide, and the like; granulated/powdered solid fillers made of such as various kinds of metal powder, splinter of wood, glass powder, ceramic powder, carbon black, granulated and powdered polymer, and the like; and other various kinds of natural/artificial staple fibers or filaments, and the like are exemplified. In addition, by adding midair filler, for example inorganic midair filler such as glass balloon, silica balloon, and the like or organic midair filler such as polyvinylidene-fluoride, polyvinylidene-fluoride copolymer, weight reduction can be achievable. Among them, the talc is preferable in terms of cost efficiency and hygienic conditions.

For the additive amount of the bulking agent, with respect to the 100 parts by weight of the isobutylene-based block copolymer (a), it is preferable that the amount of bulking agent ranges from 1 to 100 parts by weight, more preferably from 1 to 50 parts by weight, most preferably from 1 to 30 parts by weight. However, it is not preferable to exceed 100 parts by weight. The additive amount of the bulking agent exceeding 100 parts by weight would lead to deteriorate the flexibility of the synthetic cork stopper to be obtained.

Also, an antioxidant and an ultraviolet absorber may be added to the composition for the synthetic cork stopper in the present invention as needed. With respect to 100 parts by weight isobutylene-based block copolymer (a), it is preferable that the amount of antioxidant and ultraviolet absorber ranges from 0.01 to 10 parts by weight, more preferably 0.01 to 5 parts by weight.

The synthetic cork stopper in the present invention has an excellent gas-barrier property. Additionally, an oxygen absorbent may be added to the composition to absorb the oxygen inside the container and dissolved oxygen from the contents. As such an oxygen absorbent, any kinds of oxygen absorbent commercially available can be used without limitation. Examples of the oxygen absorbent are: sugar groups such as ascorbic acid (vitamin C), ascorbate, isoascorbic acid, isoascorbate, gallic acid, gallate, propyl gallate, isopropyl citrate, glucose, fructose, and the like; alkali metal salts such as BHT, BHA, EDTA; organic oxygen absorbents such as tocopherol (vitamin E), hydroquinone, catechol, resorcin, dibutylhydroxytoluene, dibutylhydroxyanisole, pyrogallol, rongalite, sorbose, glucose, lignin, and the like; iron oxygen absorbents such as iron powder, active iron, ferrous oxide, iron salt, and the like; inorganic oxygen absorbents such as sulfite salt, hyposulfite, dithionate, bisulfite, and the like; polymer-based oxygen absorbents such as polybutadiene, polyisoprene, copolymer of polybutadiene and polyisoprene, poly(meta-xylenediamine-adipic acid), (For example, commercially available MXD6 made by Mitsubishi Gas Chemical Company, Inc.), redox resin having an oxidizable (reducing) active group (such as poly(ethylene-methylacrylate-benzylacrylate), poly(ethylene-methylacrylate-tetrahydrofurfurylacrylate), poly(ethylene-methylacrylate-cyclohexenylmethylacrylate), polyhydric phenol-containing phenolaldehyde resin, and the like) polymer metal complex; oxygen adsorbent such as zeolite, active carbon, and the like. These may be used solely or two or more of them as a mixture may be used in accordance with required condition.

In case of using a powder type oxygen absorbent, the grain diameter is not specifically limited. In general, smaller grain diameter is more preferable to increase the surface area.

The oxygen absorbent may contain another material such as catalyst, water retention agent, hydrate, or the like to control the effect of the oxygen absorbent. For example, an iron oxygen absorbent can be used in combination with an electrolyte.

The electrolyte is to accelerate the oxygen absorption rate of the iron oxygen absorbent. The electrolyte may be, for example, halide of an alkali metal, halide of alkali earth metal, carbonate, hydrosulfate, hydroxide, or the like. Among them, the halide is preferable, and CaCl₂, NaCl, MgCl₂, and the like are more preferable. The electrolyte can be used with the grain of the iron oxygen absorbent by coating or by mixing. For the additive amount of the electrolyte is about 0.1 to 10 parts by weight to the iron oxygen absorbent in general.

A redox resin used as a polymer oxygen absorbent can be used in combination with a transition metal catalyst. Examples of the transitional metal catalyst are, metal salts of acetate, naphthate, stearate, acetylacetonat complex, hydrochloric, where the metal is molybdenum, iron, cobalt, rhodium, nickel, or the like.

The redox resin can be used in combination with a photosensitizer. Heretofore known photosensitizers are available such as cleavage type and hydrogen abstraction type, and the like but hydrogen abstraction type is preferably used. Practically, as the cleavage type, benzoin derivative, benzylketal, α-hydroxyacetophenone, α-aminoacetophenone flameworks are exemplified. As the hydrogen abstraction type, benzophenone, Michler's ketone, anthraquinone, thioxanthone flameworks are exemplified. These may be used solely or two or more of them may be used in combination.

The synthetic cork stopper in the present invention may be added other thermoplastic resins, thermoplastic elastomer, unvulcanized rubber, and the like, unless they deteriorate the capability of the synthetic cork stopper. As thermoplastic resins, polystyrene, acrylonitrile-styrene copolymerization, polymethylmethacrylate, polyvinyl chloride, ABS, MBS, polycarbonate, polyethylene terephthalate, polybutylene terephthalate, polyamide, polyphenylene ether, polysulfone, polyamide-imide, polyetherimide, and the like are exemplified. As the thermoplastic elastomer, styrene type elastomer, olefin type elastomer, vinyl chloride type elastomer, urethan type elastomer, ester type elastomer, nylon type elastomer, and the like are exemplified. As the unvulcanized rubber, butyl rubber, natural rubber, butadiene rubber, isoprene rubber, styrene-butadiene rubber (SBR), acrylonitrile-butadiene rubber (NBR), acrylic rubber, silicon rubber, and the like are exemplified. Among them, polyphenylene ether is preferably used for improving the heat resistance and hydrogenerated styrene elastomer such as SEBS, SEPS, and the like are also preferably used for adjusting the foaming property and the opening property.

To improve the flowability during the shaping, a petroleum-delivered hydrocarbon resin may be added as needed. The petroleum-delivered hydrocarbon resin is a resin with molar weight 300 to 10000, which is made from petroleum-delivered unsaturated hydrocarbon. For example, aliphatic petroleum resin, alicyclic petroleum resin (and its hydride), aromatic petroleum resin (and its hydride), aliphatic aromatic copolymer-type petroleum resin (and its hydride), dicyclopentadiene petroleum resin (and its hydride), low molecular weight polymer of substituted or unsubstituted styrene, coumarone-indene resin, and the like are exemplified. Among them, alicyclic saturated hydrocarbon regin is preferable in terms of compatibility with the component (a).

As some other example of additives, fire retardant, antibacterial agent, light stabilizer, pigment, colorant, flow improver, antiblocking agent, antistatic additive, cross-linker, cross-linker auxiliary agent may be added to the compound. These additives can be used solely or two or more of them may be used in combination.

Further, various types of thermoplastic resin, thermoset resin, and another thermoplastic elastomer, and the like may be added. Above all, some pigments such as carbon black and oxidized titanium are preferable to enhance the appearance of the cork stopper.

For the synthetic cork stopper in the present invention, it is preferable that the hardness of the compound before foaming ranges from 40 to 95 measured by a type A durometer stipulated JIS K-6253 (hereinafter called "JIS-A hardness"), more preferably from 50 to 90. It is not preferable that JIS-A hardness is out of the above range, because the obtained cork will be too hard or too soft to provide sufficient corking.

Also, it is preferable that the gravity of the synthetic cork stopper in the present invention ranges from 0.1 to 0.8 g/cm³, more preferably from 0.2 to 0.7 g/cm³. If the gravity is less than 0.1 g/cm³, the cork would be likely to be destroyed by a corkscrew due to the strength poverty. If the gravity is more than 0.8 g/cm³, the cork would be likely to have difficulty in insertion.

The production method of the synthetic cork stopper in the present invention is not specifically limited and a known method can be used. For example, it is produced by fluxing and kneading the each forgoing component and a required additive agent by a heat-kneading machines, such as uniaxial extrusion machine, biaxial extrusion machine, role, Banbury mixer, Brabender, kneader, high-shearing type mixer, and the like. The order of the kneading is not specifically limited and is determined according to the machine in use, the workability and the physicality of the synthetic cork stopper to be obtained.

The production method of the synthetic cork stopper in the present invention is not specifically limited, but a various kinds of known forming methods and forming equipments are available depending on the required type, usage, and form of the cork. For example, projection forming method and extrusion forming method are exemplified. These methods may be used solely or in combination. Also, it is possible to use a composition not including a foaming agent as a skin layer in the forming procedure.

As usages of the synthetic cork stopper in the present invention, the stopper for the western liquor glass bottles, such as wine, whisky, champagne, and the like; the stopper for the PET bottles and metal bottles such as tea, fruits beverages, vegetable beverages, carbonated beverages, milk beverages, coffee, cold beverages, mineral waters, and the like; the stopper for liquor bottles, such as beer, and Japanese Sake, and the like; the stopper for wide-mouth bottles such as jar for jam or mushrooms, and the like; also the stopper for small bottles for nutritious supplement drink, and the like. Above all, the synthetic cork stopper in the present invention is particularly suitable for the stopper for wine and champagne bottles.

### Examples

The present invention will be explained more practically with reference to some Examples as follows. Note that the present invention is not specifically limited to these Examples.

The molar weight of the block copolymer and the physicality of the synthetic cork stopper in the present invention were examined by the following methods.

### (Molar weight)

A GPC system made by Waters (column: Shodex K-804 made by Showa (polystyrene gel), mobile phase: chloroform) was used and the number average molecular weight was based on polystylene.

### (Sealing properties)

For the pre-foaming compounds, the hardness was measured by a type A durometer using 3 sheets of 2 mm thick press sheet in accordance with JIS K-6253. (hereinafter called JIS-A hardness) O refers to the JIS-A hardness ranging from 50 to 90, Δ refers to the JIS-A hardness ranging from 40 to 50, or 90 to 95. X refers to the JIS-A hardness below 40 or above 95.

### (Gas-barrier properties)

For the pre-foaming compounds, the transmission coefficients of carbon dioxide and oxygen were measured in accordance with JIS K-7126. 1mm thick press sheet was used as a test piece and was measured by the differential pressure method (A method). O refers to less than 1× 10⁻¹⁵ mol·m/m²·sec·Pa, Δ refers to 1 to 2x 10⁻¹⁵ mol·m/m²·sec·Pa, X refers to above 2x 10⁻¹⁵ mol·m/m²·sec·Pa.

### (Forming processability)

The extrusion foaming process was made a visual inspection. O refers to enough surface nature and foaming reaction. Δ refers to insufficient foaming reaction. X refers to no foaming reaction or many breaking foam.

### (Gravity)

The post-foaming gravity was measured by underwater substitution method in accordance with JIS K-7112. O refers to 0.2 to 0.7. Δ refers to 0.1 to 0.2 or 0.7 to 0.8. X refers to below 0.1 or above 0.8.

### (Opening property)

After the insertion of the synthetic cork stopper to a glass bottle, tried to uncork it with a corkscrew. O refers to be uncorked easily. Δ refers to be uncorked with some difficulties. X refers to the situations that the synthetic cork stopper was broken or was not uncorked.

The synthetic cork stopper was made from the following components.
(a) isobutylene-based block copolymer
   made by the following example method.
(b) foaming agent
   azodicarbonamide: VINYFOR AC#LQ made by Eiwa Chemical IND. Co., Ltd. (hereinafter called ADCA)
   sodium hydrogen carbonate: CELLBORN SC-K made by Eiwa Chemical IND. Co., Ltd. (hereinafter called SHC)
(c) polyolefin
   high-density polyethylene: HI-ZEX1300J made by Mitsui Chemicals, Inc. (density: 0.961g/cm³, MFR: 12g/10min, hereinafter called HDPE)
   low-density polyethylene: MIRASON FL60 made by Mitsui Chemicals, Inc. (density: 0.915 g/cm³, MFR: 70 g/10min, hereinafter called LDPE)
   polypropylene (random type): POLYPRO J215W (MFR: 9 g/10min, hereinafter called PRR) made by Mitsui Chemicals, Inc.
   branched chain polypropylene: HMS-PP PF-814 made by SunAllomer Ltd. (MFR: 2.8g/ 10min, hereinafter called FPP)
(d) softener
   polybutene: Idemitsu Polybutene 100R made by Idemitsu Kosan Co., Ltd. (hereinafter called 100R)
   paraffinic oil: DyanaProcess PW-90 made by Idemitsu Kosan Co. Ltd. (hereinafter called PW90)
(e) lubricant
   erucamide: NEUTRON-S made by Nippon Fine Chemical Co., Ltd. (hereinafter called EA)

### bulking agent

talc: PKP#80 made by Maruo Calcium Co., Ltd. (hereinafter called PKP80)

### processing material

fluorine-based processing material: METABLEN A-3000 made by Mitsubishi Rayon Co., Ltd. (hereinafter called A3000)

### styrene type elastomer (hereinafter called TPS)

hydrogenated styrene - butadiene-based block copolymer: kraton G1650 (29% styrene content, hereinafter called SEBS) made by Kraton Polymers Japan Co., Ltd.

Some production methods of the isobutylene-based block copolymer are as follows.

### Production Method 1: Triblock copolymer containing 30% styrene (hereinafter called SIBS-1)

After a gas inside a polymer container of a 500 ml separable flask was replaced with nitrogen, 97.6 ml of n-hexane (dried by molecular sieve) and 140.5 ml of butyl chloride (dried by molecular sieve) were added thereto with an injection syringe. Next, the polymer container was sunk in a bath filled with -70°C dry ice/methanol to cool off. Then, 47.7 ml (505.3 mmol) of isobutylene monomer was sent to the polymer container by nitrogen pressure from a pressure-resistant glass-made liquefying correction tube with three-way cocks provided with a solution-sending tube made of Teflon (registered trademark). After adding 0.097 g (0.42 mmol) of p-dicumylchloride and 0.073 g (0.84 mmol) of N,N-dimethyl acetamide, 1.66 ml (15.12 mmol) titanium tetrachloride was also added and copolymerization is started. In 75-minute agitation started with the copolymerization, 1ml polymerization liquid was extracted as a sample. Then 13.71 g (131.67 mmol) of styrene monomer was added into the polymer container. 75 minutes after adding the above mixed solution, a large amount of water was added to stop the polymerization.

The reaction liquid was washed with water twice. Then the solvent was evaporated off. The resultant polymer was dried under vacuum for 24 hours at 60°C, whereby the objective block copolymer was obtained. In GPC analysis of the obtained isobutylene-based block copolymer, a number average molecular weight of the isobutylene-based block copolymer was 103,000. In the ¹H-NMR analysis, the contained amount of polystyrene was 30 wt%.

Production Method 2: Triblock copolymer containing 15% styrene (hereinafter called SIBS-2)

A target isobutylene-based block copolymer was obtained by adjusting the weight ratio between isobutylene monomer and styrene monomer in the same manner as Production Method 1. GPC analysis showed that the obtained isobutylene-based block copolymer had an number average molecular weight of the isobutylene-based block copolymer of 100,000. In the ¹H-NMR analysis, polystyrene content thereof was 15 wt%.

### (Example, Comparative Example)

### [First Step]

Each component except foaming agent in Chart 1 at a shown rate was dissolved and stirred at 180°C by a TEX30-HSS biaxial extrusion machine (made by The Japan Steel Works, Ltd.). Then the obtained mixture was formed to a 2 mm-thick press sheet by pressing for 5 minutes at 170°C and its sealing and gas-barrier properties were analyzed.

### [Second Step]

A predetermined amount of foaming agent was dry blended to the composition obtained in the first procedure, then blew it cylindrically by using Labo Plastomill, a monoaxial extrusion machine (made by Toyo Seiki Seisaku -Sho, Ltd.) to analyze the workability during the foaming and opening property as a synthetic cork stopper. The test result is shown in Table 1.

**[Table 1]**

| | | EX.1 | EX.2 | EX.3 | EX.4 | EX.5 | EX.6 | EX.7 | EX.8 | EX.9 | EX.10 | EX.11 | EX.12 | EX.13 | Com.EX. 1 | Com.EX. 2 | Com.EX. 3 |
|---|---|---|---|---|---|---|---|---|---|---|---|---|---|---|---|---|---|
| Step 1 | | | | | | | | | | | | | | | | | |
| (a) | SIBS-1 | 100 | 100 | 100 | 100 | 100 | | 100 | 100 | 100 | 100 | 100 | 100 | 100 | | | |
| | SIBS-2 | | | | | | 100 | | | | | | | | | | |
| (c) | HDPE | | 25 | | | | | | | | | | | | | | |
| | LDPE | | | 25 | | | | | | | | | | | | | |
| | RPP | | | | 25 | | 25 | 25 | 25 | 15 | 25 | 25 | 25 | 100 | | 25 | 100 |
| | FPP | | | | | 25 | | | | | | | | | | | |
| (d) | 100R | | | | | | | 40 | | | | | | 50 | | | |
| | PW90 | | | | | | | | 40 | | | | | | | 40 | 100 |
| (e) | EA | | | | | | | | | | 1.25 | 1.25 | 1.25 | 2.5 | | | 3 |
| bulking agent | PKP80 | | | | | | | | | 20 | | | | | | | |
| processing material | A3000 | | | | | | | | | | | 1 | 1 | 1 | | | 1 |
| TPS | SEBS | | | | | | | | | | | | | | 100 | 100 | 100 |
| sealing property | | 50 | 71 | 67 | 78 | 85 | 61 | 55 | 54 | 65 | 56 | 78 | 77 | 89 | 77 | 85 | 92 |
| | | ○ | O | O | O | O | O | O | O | O | O | O | O | O | O | O | Δ |
| gas-barrier property | | 0.45 | 0.35 | 0.41 | 0.39 | 0.38 | 0.39 | 0.63 | 1.02 | 0.39 | 0.64 | 0.39 | 0.39 | 0.45 | 3.1 | 4.2 | 6.1 |
| | | O | O | O | O | O | O | O | Δ | O | O | O | O | O | X | X | X |

| Step 2 | | | | | | | | | | | | | | | | | |
|---|---|---|---|---|---|---|---|---|---|---|---|---|---|---|---|---|---|
| (b) | ADCA | 2 | 2 | 2 | 2 | 2 | 2 | 2 | 2 | 2 | 2 | 2 | | 2 | 2 | 2 | 2 |
| | SHC | | | | | | | | | | | | 2 | | | | |
| shaping property | | Δ | Δ | Δ | Δ | O | Δ | Δ | Δ | Δ | Δ | O | O | O | X | Δ | O |
| gravity | | 0.74 | 0.65 | 0.59 | 0.66 | 0.45 | 0.71 | 0.73 | 0.75 | 0.79 | 0.65 | 0.39 | 0.36 | 0.33 | 0.83 | 0.71 | 0.58 |
| | | Δ | O | O | O | O | Δ | Δ | Δ | Δ | O | O | O | O | X | Δ | O |
| opening property | | Δ | Δ | Δ | Δ | Δ | Δ | Δ | Δ | Δ | O | O | O | O | Not Evaluable | Δ | O |

| | | | | | | | | | | | | | | | | | |
|---|---|---|---|---|---|---|---|---|---|---|---|---|---|---|---|---|---|
| *The unit of gas-barrier property (the transmission coefficients of oxygen): × 10⁻¹⁵ mol·m/m²·sec·P | | | | | | | | | | | | | | | | | |

According to Table 1, the synthetic cork stoppers of Examples 1 to 13 have an excellent sealing property and gas-barrier property to be preferably used as a cork stopper. Among them, Examples 2 to 5, which were added various kinds of polyolefin, improved in foaming property and showed a tendency of low gravity. Particularly, Embodiment 5, branched polypropylene was used, was satisfactory in forming processability and foaming property and was preferable to be able to obtain a low gravity synthetic cork stopper. In addition, Example 6 showed that isobutylene-based block copolymer containing small amount of styrene allowed to create more flexible synthetic cork stopper and to improve in sealing property. Also, Embodiments 7 and 8 showed that softener was able to improve the flexibility despite of the decline in gas-barrier property slightly. Embodiment 7, using polybutene as a softener, shows that polybutene is more preferable softener for preventing the decline in gas-barrier property. Embodiment 9 showed that it was sufficiently usable even though the bulking agent was added to. Also, Embodiments 10 to 13 showed that opening property was improved by adding lubricant. Particularly, Embodiment 11 to 13 were improved in forming processability and foaming property by adding processing material as well, which proved that it was possible to create the synthetic cork stopper which is satisfactory in sealing property, gas-barrier property, forming processability, gravity, and opening property. Among them, Embodiment 12 showed that carbonic type foaming agent is preferably available as well as azo type foaming agent. Embodiment 13 proved that excellent synthetic cork stopper was created despite of increasing in polyolefin and softener.

On the contrary, comparative example 2 and 3 as prior arts showed that the quality was improved by adding polyolefin, softener, and processing material compared with the comparative example 1, but the gas-barrier property was insufficient.

## Claims

1. A synthetic cork stopper, being produced by foaming a composition, wherein the composition comprises:
(a) isobutylene-based block copolymer including:
(i) a polymer block whose main component is isobutylene; and
(ii) a polymer block formed from a cationic polymerizable monomer whose main component is other than isobutylene; and
(b) a foaming agent.

2. The synthetic cork stopper as set forth in claim 1, wherein the composition comprises the component (b) in a range of 0.1 to 10 parts by weight, to 100 parts by weight of the component (a).

3. The synthetic cork stopper as set forth in claim 2, wherein the composition further comprises (c) a polyolefin in a range of 1 to 100 parts by weight.

4. The synthetic cork stopper as set forth in claim 2 or 3, wherein the composition further comprises (d) a softener in a range of 1 to 100 parts by weight.

5. The synthetic cork stopper as set forth in any one of claims 2 to 4, wherein the composition further comprises (e) a lubricant in a range of 0.1 to 10 parts by weight.

6. The synthetic cork stopper as set forth in any one of claims 1 to 5, wherein:
the polymer block (ii) is a polymer block whose main component in component (a) is an aromatic vinyl monomer.

7. The synthetic cork stopper as set forth in claim 6, wherein:
the component (a) is a triblock copolymer formed as the polymer block (ii)-the polymer block (i)-the polymer block (ii).

8. The synthetic cork stopper as set forth in claim 6 or 7, wherein:
the aromatic vinyl monomer in the component (a) is at least one selected from the group consisting of styrene, p-methylstyrene, α-methylstyrene, and indene.

9. The synthetic cork stopper as set forth in any one of claims 1 to 8, wherein:
(b) the foaming agent is one selected from the group consisting of azodicarboxylic amide, sodium hydrogen carbonate, and citric acid.

10. The synthetic cork stopper as set forth in any one of claims 3 to 9, wherein (c) the polyolefin is polyethylene or polypropylene.

11. The synthetic cork stopper as set forth in any one of claims 4 to 10, wherein (d) the softener is polybutene.

12. The synthetic cork stopper as set forth in any one of claims 1 to 11, wherein the composition has a JIS-A hardness in a range of 40 to 95 before being foamed.

13. The synthetic cork stopper as set forth in any one of claims 1 to 12, having a specific gravity in a range of 0.1 to 0.8g/cm³.
